# EUROPÄISCHE PATENTANMELDUNG

(11) **EP 0 947 149 A1**
(43) Veröffentlichungstag der Anmeldung: **06.10.1999**
(21) Anmeldenummer: 99105050.1
(22) Anmeldetag: 23.03.1999
(51) Int. Cl.: A47B 77/14, A47J 47/16, A47G 21/14

(54) **Haltevorrichtung zur gebrauchsbereiten Aufnahme von Arbeitsgeräten**

(30) Priorität: 02.04.1998 DE 29806075 U
(71) Anmelder: Günter Thomas, 40479 Düsseldorf (DE)
(72) Erfinder: Günter Thomas, 40479 Düsseldorf (DE)
(74) Vertreter: Kahlhöfer, Hermann, Dipl.-Phys.

(57) **Zusammenfassung**

Die erfindungsgemäße Haltevorrichtung (1) ist vorzugsweise in einem formgebenden Verarbeitungsprozeß aus einem Kunststoff, insbesondere einem Thermoplast, herstellbar und zur Befestigung unter einer horizontalen oder vertikalen Trägerfläche vorgesehen, wobei die Einschubkanäle (3) eine etwa horizontale Einschubrichtung aufweisen, so daß kaum Schmutz, insbesondere Staub, in die Einschubkanäle (3) eindringen kann, bei in dieser Lage gleichzeitig gebrauchsbereiter und durch zusätzliche Maßnahmen gegen Herausfallen gesicherten Halterung von insbesondere in einer Küche benötigtem Arbeitsgerät.

Unterschiedlichen Bedürfnissen Rechnung tragend ist die Haltevorrichtung (1) insbesondere mit verschiedenen Frontplatten ausrüstbar.

## Beschreibung

Die Erfindung betrifft eine Haltevorrichtung mit einer Kontaktfläche zur Befestigung in Kontakt mit einer Trägerfläche und einer Mehrzahl von im wesentlichen zur Kontaktfläche parallelen Einschubkanälen zur gebrauchsbereiten Aufnahme von Arbeitsgeräten.

Haltevorrichtungen zur gebrauchsbereiten Aufnahme von Arbeitsgeräten finden bekanntermaßen beispielsweise in privaten oder gewerblichen Küchen, in der Lebensmittelbranche wie Fleischereiwesen oder auch in Werkstätten der Privathaushalte, des Handwerks und der Industrie, ihren Einsatz.

Allgemein soll mit einer Haltevorrichtung beispielsweise häufig verwendetes Arbeitsgerät einen festen und übersichtlichen Platz erhalten, um zugleich den schnellen Zugriff auf das jeweils benötigte Arbeitsgerät sicherstellen, ohne beispielsweise erst in einer Schublade oder einer Arbeitsgerätekiste mühsam danach suchen zu müssen.

Dazu sind Haltevorrichtungen bekannt, die beispielsweise einen Korpus aus Holz, Metall oder Kunststoff aufweisen, welcher eine Mehrzahl von Einschubkanälen umfaßt, in denen verschiedenartige Arbeitsgeräte durch vertikales Einstecken gehaltert werden können. Die Einschubkanäle weisen demgemäß auch überwiegend eine vertikale Einschubrichtung auf. Es sind jedoch auch Haltevorrichtungen bekannt, die alternativ oder kumulativ Einschubkanäle mit einer unter einem Winkel, vorzugsweise mit einer unter einem Winkel von 45° angeordneten Einschubrichtung, aufweisen. Der Korpus dieser Haltevorrichtungen ist in der Regel so standfest ausgebildet, daß er aufeiner Arbeitsplatte abgestellt werden kann.

Wenn die Arbeitsplatte für andere Arbeiten oder zum Abstellen von Gegenständen benötigt oder auch nur gereinigt wird, sind derartige Haltvorrichtungen unter Umständen jedoch hinderlich und müssen umgestellt oder zumindest angehoben werden.

Bekannt sind deshalb auch Haltevorrichtungen, die eine Kontaktfläche zur Befestigung in Kontakt mit einer Trägerfläche, beispielsweise einer Wand, aufweisen. Solche Haltevorrichtungen sind vorzugsweise aus Profilen, beispielsweise einem U-Profil, gebildete und so ausgelegt, daß in mindestens einem Schenkel des Profils, eine Mehrzahl von Einschuböffnungen zur vertikalen Aufnahme und Halterung von Arbeitsgeräten vorgesehen sind.

Bisher beschriebene Haltevorrichtungen weisen den gemeinsamen Nachteil auf, daß insbesondere die Einschubkanäle und/oder Einschuböffnungen leicht verschmutzen können, insbesondere durch Staub.

Dies kann dann von Bedeutung sein, wenn der Gebrauch von Arbeitsgeräten Hygienevorschriften unterliegt. Zur Einhaltung solcher, teilweise recht strengen Hygienevorschriften sind beispielsweise Haltevorrichtungen für Arbeitsgeräte zum Teilen oder Zerkleinern von Lebensmitteln bekannt, die sich leicht reinigen lassen und/oder unter eine Schutzhaube einklappen lassen.

So ist in der DE 41 18 671 A1 eine Vorrichtung zur gebrauchsbereiten Aufbewahrung von vorzugsweise im Fleischereiwesen verwendeten Handgeräten angegeben, welche von Hand schnell und einfach auseinandernehmbar und wieder zusammensetzbar ist, wobei der Korpus quaderförmig ausgebildet ist und aus zwei aneinanderliegenden Plattenteilen besteht, welche auf ihrer einander zugekehrten Seiten mit mehreren aufrechten Nuten versehen sind, die jeweils bei Aneinanderlage der Plattenteile die vollständigen Aufnahmen für die Handgeräte bilden. Für die Verbindung der Plattenteile weist die Vorrichtung eine Steckverbindungskonstruktion, vorzugsweise eine Schwalbenschwanzverbindung, auf, wobei die Schwalbenschwänze, ihrer Funktion nach Kontaktflächen zur Befestigung des Korpus mit Montagestreben, an den seitlichen Endschmalseiten des Korpus ausgebildet sind. Die Aufnahmen für die Handgeräte sind im wesentlichen zu den Kontaktflächen parallel angeordnet und weisen eine vertikale Einschubrichtung, bzw. in Verbindung mit geneigt ausgebildeten Montagestreben eine entsprechend geneigte Einschubrichtung, auf. Eine solche, vorzugsweise für das Fleischereiwesen ausgelegte Haltevorrichtung kann außerhalb des Fleischereiwesens, beispielsweise in privaten Haushalten, aufeine geringe Akzeptanz stoßen.

Die DE 295 18 155 U1 bezieht sich auch ein Küchengerät mit einer an einer senktrechten Wand an einem Arbeitsfeld anbringbaren Vertikalträgereinheit zur Aufnahme von Arbeitsgerät und/oder Speisezutaten. Hiernach ist vorgesehen, daß an der Vertikalträgereinheit eine Schneideunterlage in einem in eine horizontale Lage abschwenkbaren Schwenkträger gehalten ist. Ein herausschwenkbar angeordneter als Block ausgestalteter Gerätehalter, dessen Ausschwenkbewegung mittels eines seitlichen, oberhalb der gelenkigen Lagerung beweglich angeordneten Haltearms begrenzt ist, ist an seinem unteren Endbereich gelenkig gelagert. Neben den Mehrkosten für die Klappmechanik kann bei einer derartigen Haltevorrichtung der lediglich mittelbare Zugriff auf die Arbeitsgeräte nachteilig sein.

Aufgabe der Erfindung ist es, eine Vorrichtung zur gebrauchsbereiten Haltetung von Arbeitsgeräten anzugeben, welche einfach und preiswert herstellbar ist.

Diese Aufgabe wird nach Anspruch 1 durch eine Haltevorrichtung mit einer Kontaktfläche zur Befestigung in Kontakt mit einer Trägerfläche und einer Mehrzahl von im wesentlichen zur Kontaktfläche parallelen Einschubkanälen zur gebrauchsbereiten Aufnahme von Arbeitsgeräten erfindungsgemäß dadurch gelöst, daß die Haltevorrichtung zur Befestigung unter einer horizontalen oder an einer vertikalen Trägereinheit vorgesehen ist, wobei die Einschubkanäle eine etwa horizontale Einschubrichtung aufweisen und so gestaltet sind, daß die Arbeitsgeräte in dieser Lage sicher gehaltert werden können. Weitere, besonders vorteilhafte Ausgestaltungen der Erfindung offenbaren die Unteransprüche.

Die Haltevorrichtung kann massiv oder einstückig mit einem Gehäuse ausgebildet sein. Erfindungsgemäß bevorzugt ist die Haltevorrichtung aus wenigstens zwei Teilen, einer Frontplatte und einem Gehäuse, gebildet. Als Material bieten sich für eine formgebende Verarbeitung geeignete Kunststoffe, vorzugsweise Thermoplaste, an.

Bevorzugt sind die Einschubkanäle im Gehäuse abgestützt, wobei die Einschubkanäle und die Frontplatte einstückig ausgebildet sind. Zur Verbindung von Frontplatte und Gehäuse weist eines Rastnasen und das andere mit den Rastnasen zusammenwirkende Rastnuten auf Alternativ können Frontplatte und Gehäuse auch mittels eines Klebers verbunden oder miteinander verschweißt sein.

Zur erleichterten Einführung von Arbeitsgeräten weisen die Einschubkanäle Einschuböffnungen mit einem trichterförmigen Rand auf. Die Wände der Einschubkanäle sind bevorzugt so ausgebildet, daß sie eng an einem eingeführten Arbeitsgerät anliegen. Dadurch wird insbesondere ein Kippen des eingeführten Arbeitsgeräts verhindert.

Die Haltevorrichtung weist ferner Mittel zur sicheren Halterung der Arbeitsgeräte, insbesondere zur Sicherung gegen Herausfallen, auf Erfindungsgemäß bevorzugt sind die Mittel zur sicheren Halterung durch den Einschuböffnungen nachgeordnete Lippen aus nachgiebigen und rutschfestem Material wie Leder oder Gummi gebildet. Alternativ oder kumulativ sind die Mittel zur sicheren Halterung für Arbeitsgeräte, insbesondere aus ferromagnetischem Material, durch Magnete gebildet, welche vorzugsweise benachbart zu den Einschubkanälen und/oder den Einschuböffnungen angeordnet sind.

Zur Befestigung der Haltevorrichtung an einer Trägerfläche weist wenigstens die Kontaktfläche Bohrungen für lösbare Befestigungselemente, insbesondere Schrauben, auf. Alternativ kann die Bohrung auch durch das ganze Gehäuse geführt sein, wobei diese Lösung auch Maßnahmen zum Versenken des Schraubenkopfes umfaßt. Statt einer Befestigung mittels Schrauben kann eine Befestigung auch mittels Klebestreifen erfolgen.

Erfindungsgemäß ist die Haltevorrichtung zur Befestigung unter einer horizontalen oder an einer vertikalen Trägerfläche vorgesehen. Für Haltevorrichtungen, deren Einschubkanäle erfindungsgemäß bevorzugt so bemessen sind, um in einer Küche benötigte Arbeitsgeräte wie Schneidbrett und Schneidwerkzeug, insbesondere Messer und Schere, sowie gegebenenfalls sonstiges Zubehör, insbesondere eine Wetzstein, gebrauchsbereit aufzunehmen, kommen als horizontale Trägerfläche vorzugsweise die Unterseite eines Küchenschrankes, als vertikale Trägerfläche die Seitenwand eines Küchen- oder Kühlschrankes, in Betracht.

Natürlich können die Einschubkanäle einer nach der Erfindung aufgebauten Haltevorrichtung auch so bemessen sein, um in einer Werkstatt benötigte Arbeitsgeräte wie Schraubendreher, Feilen, Maulschlüssel und ähnlichem Arbeitsgerät gebrauchsbereit aufzunehmen. Als Trägerflächen für eine erfindungsgemäße Befestigung der Haltevorrichtung kam hier beispielsweise die Unterseite einer Werkbank oder eines Hängeschrankes sowie die Seitenwand eines Schrankes dienen.

Die Haltevorrichtungen für die vorstehend lediglich beispielhaft aufgeführten Anwendungsgebiete weisen bei einer erfindungsgemäßen Befestigung unter einer horizontalen oder an einer vertikalen Trägereinheit, Einschubkanäle mit einer etwa horizontalen Einschubrichtung auf, was neben der gebrauchsbereiten sicheren Halterung der Arbeitsgeräte insbesondere eine starke Verschmutzung der Einschubkanäle und/oder der Einschuböffnungen verhindert, insbesondere bei einer horizontalen Befestigung unter einem Hängeschrank.

Zusätzliche Einzelheiten und weitere Vorteile werden nachfolgend an Hand eines bevorzugten Ausführungsbeispiels, nämlich an einer Haltevorrichtung für in einer Küche benötigte Arbeitsgeräte in Verbindung mit den beigefügten Zeichnungen beschrieben. Darin zeigen:
- Fig. 1: Eine Haltevorrichtung in perspektivischer Ansicht;
- Fig. 2: eine Frontplatte der Haltevorrichtung nach Fig. 1 in der Vorderansicht;
- Fig. 3: ein anderes Ausführungsbeispiel einer Frontplatte für eine Haltevorrichtung nach Fig. 1 in der Vorderansicht;
- Fig. 4: die Frontplatte nach Fig. 2 mit Schnitt entlang der Linie A-A in der Seitenansicht;
- Fig. 5: die Frontplatte nach Fig. 2 mit Schnitt entlang der Linie B-B in der Seitenansicht;
- Fig. 6: ein anderes Ausführungsbeispiel einer Frontplatte für eine Haltevorrichtung in der Rückansicht;
- Fig. 7: ein anderes Ausführungsbeispiel einer Frontplatte für eine Haltevorrichtung in der Rückansicht;
- Fig. 8: eine Vorderansicht der Haltevorrichtung nach Fig. 1 ohne Frontplatte; und
- Fig. 9: eine Seitenansicht der Haltevorrichtung nach Fig. 1 im Schnitt.

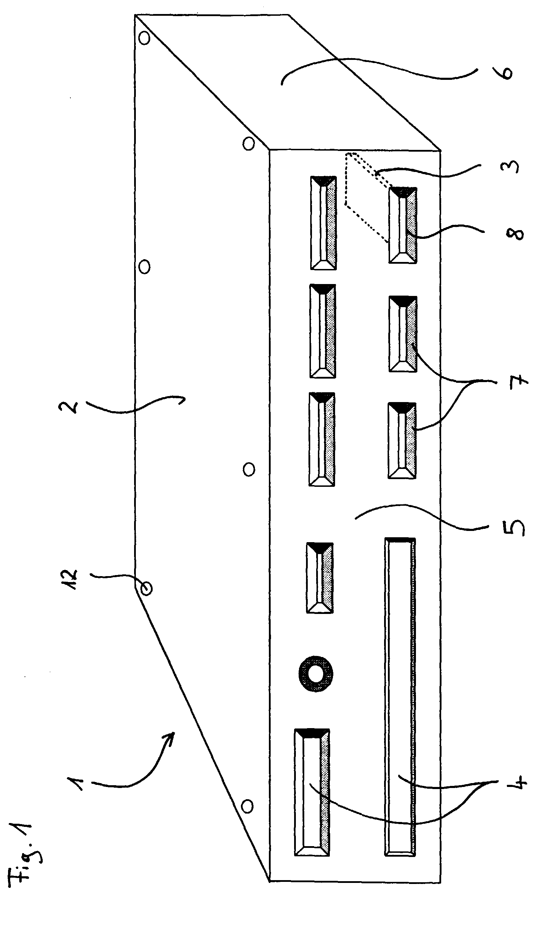

Fig. 1 zeigt eine Haltevorrichtung 1 in perspektivischer Ansicht mit einer Kontaktfläche 2 zur Befestigung in Kontakt mit einer nicht dargestellten Trägerfläche und einer Mehrzahl von im wesentlichen zur Kontaktfläche 2 parallelen Einschubkanälen 3 zur gebrauchsbereiten Aufnahme von in der Küche benötigten Arbeitsgeräten. Die Haltevorrichtung 1 ist aus zwei Teilen, einer Frontplatte 5 und einem Gehäuse 6 gebildet. Zum Verbinden von Frontplatte 5 und Gehäuse 6 weist eines nicht dargestellte Rastnasen und das andere mit den Rastnasen zusammenwirkende nicht dargestellte Rastnuten auf. Die Einschubkanäle 3 weisen Einschuböffnungen 4 mit einem trichterförmigen Rand 7 auf Die Wände 8 der Einschubkanäle 3 sind so ausgebildet, daß sie eng an einem eingeführten nicht dargestellten Arbeitsgerät anliegen. Zur Befestigung der Haltevorrichtung 1 unter einer horizontalen oder vertikalen nicht dargestellten Trägerfläche weist die Kontaktfläche 2 Bohrungen 12 für lösbare Befestigungselemente wie Schrauben auf, die so durch das ganze Gehäuse 6 führen, daß die Schraubenköpfe wenigstens plan mit der der Kontaktfläche 2 gegenüberliegenden Gehäuseseite abschließen.

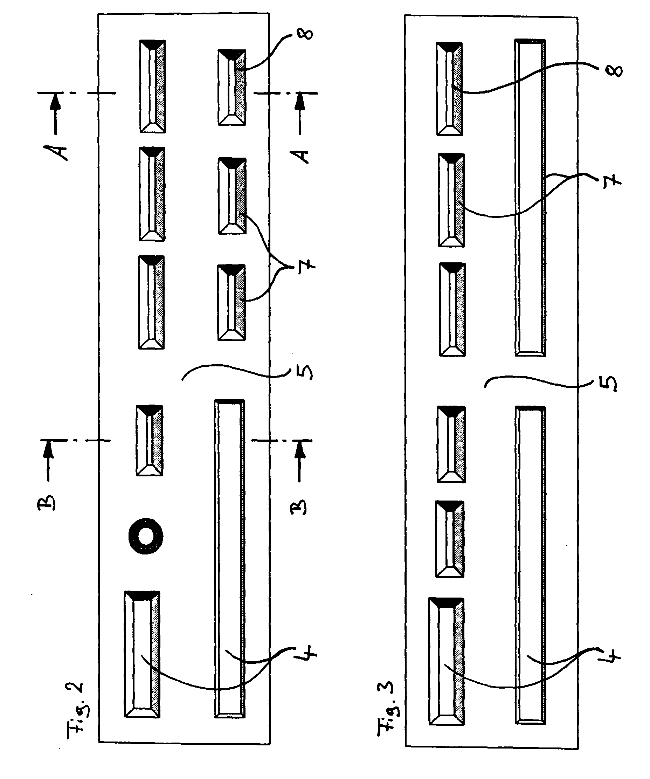

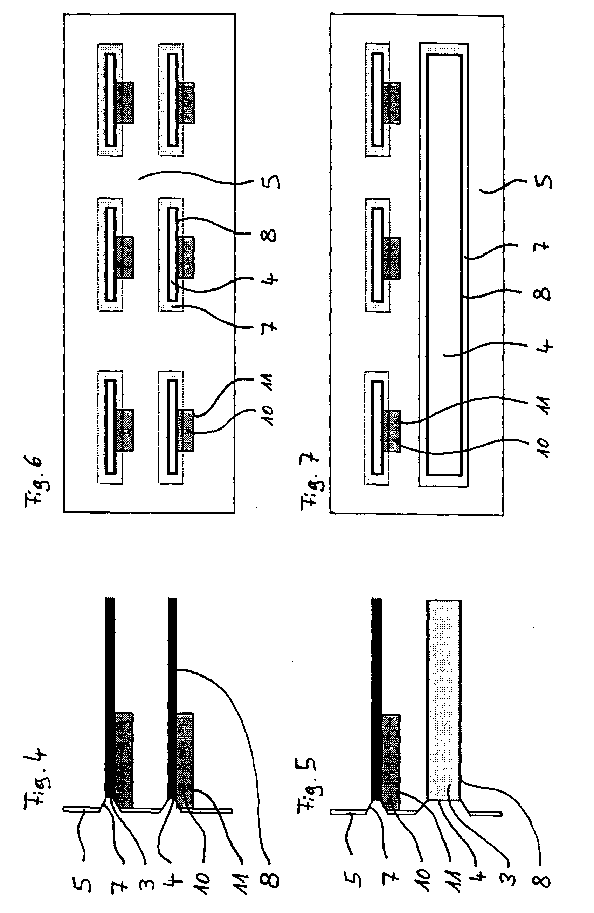

Fig. 2 zeigt eine Frontplatte 5 der Haltevorrichtung nach Fig. 1 in der Vorderansicht. Die Frontplatte 5 weist von links nach rechts betrachtet in der oberen Reihe Einschuböffnungen 4 für eine Schere, einen Wetzstein und mehrere Messer auf und in der unteren Reihe eine Einschuböffnung 4 für ein Schneidbrett sowie Einschuböffnungen für weitere Küchenmesser auf

Fig. 3 zeigt ein anderes Ausführungsbeispiel einer Frontplatte für eine Haltevorrichtung nach Fig. 1 in der Vorderansicht. Von links nach rechts betrachtet sind in der oberen Reihe Einschuböffnungen 4 für eine Schere und mehrere Messer und in der unteren Reihe Einschuböffnungen 4 für zwei Schneidbretter angeordnet.

Fig. 4 zeigt die Frontplatte 5 nach Fig. 2 mit Schnitt entlang der Linie A-A in der Seitenansicht. Darin sind die Einschubkanäle 3 und die Frontplatte 5 einstückig ausgebildet. Die Einschuböffnungen 4 selbst sind zwecks leichterer Einführung der in einer Küche benötigten Arbeitsgeräte mit einem konischen Rand 7 versehen. Zur sicheren Halterung sind benachbart zu den Einschubkanälen 3 und den Einschuböffnungen 4 für Arbeitsgeräte aus ferromagnetischem Material, Magnete 10 angeordnet und in Aufnehmer 11 gehaltert.

Fig. 5 zeigt die Frontplatte 5 nach Fig. 2 mit Schnitt entlang der Linie B-B in der Seitenansicht. Alternativ oder kumulativ zur Sicherung ferromagnetischer Arbeitsgeräte mittels Magnete können den Einschuböffnungen 4 zwecks sicherer Halterung jeglicher Art von Arbeitsgeräten auch nicht dargestellte Lippen aus rutschfestem Material wie Leder oder Gummi nachgeordnet sein.

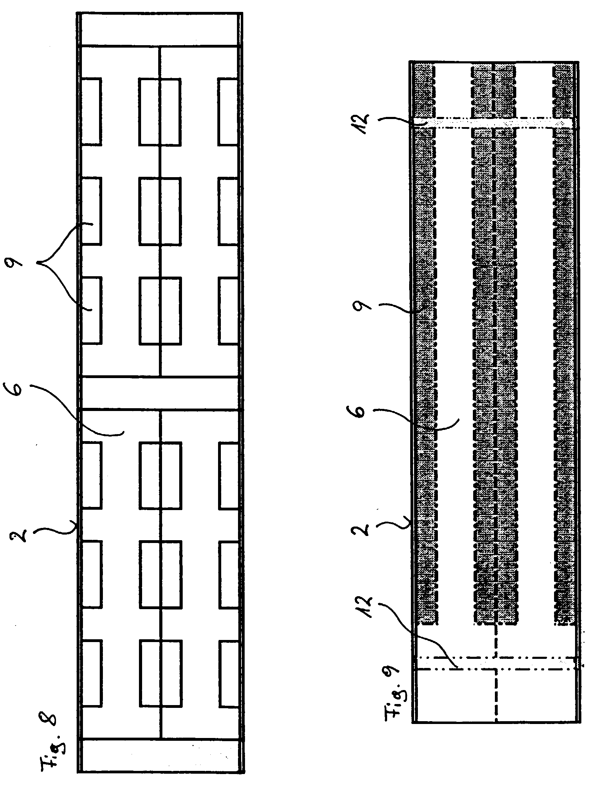

Fig. 6 und 7 zeigen andere Ausführungsbeispiele einer Frontplatte 5 für eine Haltevorrichtung in der Rückansicht. Während in der Frontplatte 5 nach Fig. 6 nur Einlaßöffnungen 4 für Messer vorgesehen sind, weist die Frontplatte 5 nach Fig. 7 in der oberen Reihe Einlaßöffnungen 4 für Messer und in der unteren Reihe eine Einlaßöffnung für ein Schneidbrett auf Die zumeist aus ferromagnetischem Material bestehenden Messer sind erfindungsgemäß bevorzugt durch in Aufnehmer 11 gehalterte Magnete 10 gegen ein Herausfallen gesichert.

Fig. 8 zeigt eine Vorderansicht der Haltevorrichtung 1 nach Fig. 1 ohne Frontplatte 5. Deutlich sind im Gehäuse 6 Stützen 9 sichtbar, welche die Einschubkanäle 3 sowohl von ihrer Ober- wie Unterseite gegen Scherung abstützen. Natürlich kann eine solche Abstützung sich auch abweichend von der zeichnerischen Darstellung über die ganze Länge der Haltevorrichtung 1 erstrecken.

Fig. 9 zeigt eine Seitenansicht der Haltevorrichtung nach Fig. 1 im Schnitt. Darin erstrecken die die Stützen 9 wenigsten über eine solche Breite der Haltevorrichtung, daß die abzustützenden Einschubkanäle 3 hinreichend gegen Scherbruch abgesichert sind. Zur Befestigung der Haltevorrichtung 1 an der Kontaktfläche 2 in Kontakt mit einer nicht dargestellten Trägerfläche durchlaufen das Gehäuse 6 Bohrungen 12 für lösbare Befestigungselemente, wobei die Bohrungen nicht dargestellt so beschaffen sind, daß die Schraubenköpfe versenkbar sind.

Die erfindungsgemäße Haltevorrichtung 1 ist vorzugsweise in einem formgebenden Verarbeitungsprozeß aus einem Kunststoff, insbesondere einem Thermoplast, herstellbar und zur Befestigung unter einer horizontalen oder vertikalen Trägerfläche vorgesehen, wobei die Einschubkanäle 3 eine etwa horizontale Einschubrichtung aufweisen, so daß kaum Schmutz, insbesondere Staub, in die Einschubkanäle 3 eindringen kann, bei in dieser Lage gleichzeitig gebrauchsbereiter sicheren Halterung von insbesondere in einer Küche benötigtem Arbeitsgerät. Unterschiedlichen Bedürfnissen Rechnung tragend ist die Haltevorrichtung 1 insbesondere mit verschiedenen Frontplatten ausrüstbar.

### Bezugszeichenliste

- 1: Haltevorrichtung
- 2: Kontaktfläche
- 3: Einschubkanäle
- 4: Einschuböffnung
- 5: Frontplatte
- 6: Gehäuse
- 7: trichterförmiger Rand
- 8: Wände der Einschubkanäle 3
- 9: Stützen für die Einschubkanäle 3
- 10: Magnete
- 11: Aufnehmer für die Magnete 10
- 12: Bohrung

## Patentansprüche

1. Haltevorrichtung (1) mit einer Kontaktfläche (2) zur Befestigung in Kontakt mit einer Trägerfläche und einer Mehrzahl von im wesentlichen zur Kontaktfläche (2) parallelen Einschubkanälen (3) zur gebrauchsbereiten Aufnahme von Arbeitsgeräten dadurch gekennzeichnet, daß die Haltevorrichtung (1) zur Befestigung unter einer horizontalen oder an einer vertikalen Trägerfläche vorgesehen ist, wobei die Einschubkanäle (3) eine etwa horizontale Einschubrichtung aufweisen und so gestaltet sind, daß die Arbeitsgeräte in dieser Lage sicher gehaltert werden können.

2. Haltevorrichtung nach Anspruch 1, dadurch gekennzeichnet, daß die Haltevorrichtung massiv ausgebildet ist.

3. Haltevorrichtung nach Anspruch 1, dadurch gekennzeichnet, daß die Haltevorrichtung einstückig ausgebildet ist und ein Gehäuse aufweist.

4. Haltevorrichtung (1) nach Anspruch 1, dadurch gekennzeichnet, daß die Haltevorrichtung (1) aus wenigstens zwei Teilen, einer Frontplatte (5) und einem Gehäuse (6), gebildet ist.

5. Haltevorrichtung (1) nach Anspruch 3 oder 4, dadurch gekennzeichnet, daß die Einschubkanäle (3) im Gehäuse (6) abgestützt sind.

6. Haltevorrichtung (1) nach Anspruch 4 oder 5, dadurch gekennzeichnet, daß die Einschubkanäle (3) einstückig mit der Frontplatte (5) ausgebildet sind.

7. Haltevorrichtung (1) nach Anspruch 4, 5 oder 6, dadurch gekennzeichnet, daß von Frontplatte (5) und Gehäuse (6) eines Rastnasen und das andere mit den Rastnasen zusammenwirkende Rastnuten aufweist.

8. Haltevorrichtung (1) nach einem der vorherigen Ansprüche, dadurch gekennzeichnet, daß die Einschubkanäle (3) Einschuböffnungen (4) mit einem trichterförmigen Rand (7) aufweisen.

9. Haltevorrichtung (1) nach einem der vorherigen Ansprüche, dadurch gekennzeichnet, daß die Einschubkanäle (3) Wände (8) aufweisen, die eng an einem eingeführten Arbeitsgerät anliegen.

10. Haltevorrichtung (1) nach einem der vorherigen Ansprüche, dadurch gekennzeichnet, daß die Haltevorrichtung (1) Mittel zur sicheren Halterung (9, 10) der Arbeitsgeräte aufweist.

11. Haltevorrichtung (1) nach Anspruch 10, dadurch gekennzeichnet, daß die Mittel zur sicheren Halterung durch den Einschuböffnungen (4) nachgeordnete Lippen aus nachgiebigen und rutschfestem Material wie Leder oder Gummi gebildet sind.

12. Haltevorrichtung (1) nach Anspruch 10 oder 11, dadurch gekennzeichnet, daß die Mittel zur sicheren Halterung, insbesondere für Arbeitsgeräte aus ferromagnetischem Materiel, durch Magnete (10) gebildet sind.

13. Haltevorrichtung (1) nach Anspruch 12, dadurch gekennzeichnet, daß die Magnete (10) benachbart zu den Einschubkanälen (3) und/oder den Einschuböffnungen (4) angeordnet sind.

14. Haltevorrichtung (1) nach einem der vorherigen Ansprüche, dadurch gekennzeichnet, daß wenigstens die Kontaktfläche (2) Bohrungen (12) für lösbare Befestigungselemente zur Befestigung der Haltevorrichtung (1) an der Trägerfläche aufweist.

15. Haltevorrichtung (1) nach einem der vorherigen Ansprüche, dadurch gekennzeichnet, daß die Einschubkanäle (3) so bemessen sind, um in einer Küche benötigte Arbeitsgeräte wie Schneidbrett und Schneidwerkzeug, insbesondere Messer und Schere, sowie gegebenenfalls sonstiges Zubehör, insbesondere ein Wetzstein, gebrauchsbereit aufzunehmen.
